# FASCICULE DE BREVET EUROPEEN

(11) **EP 2 965 988 B1**
(45) Date de publication et mention de la délivrance du brevet: **28.09.2016**
(21) Numéro de dépôt: 15172400.2
(22) Date de dépôt: 16.06.2015
(51) Int. Cl.: B64C 27/57, G05D 1/08

(54) **MÉTHODE DE RÉGULATION DE LA VITESSE DE ROTATION DU ROTOR PRINCIPAL D'UN GIRAVION MULTI-MOTEUR EN CAS DE PANNE DE L UN DES MOTEURS**
REGULIERUNGSMETHODE DER DREHGESCHWINDIGKEIT DES HAUPTROTORS EINES MIT MEHREREN MOTOREN AUSGESTATTETEN DREHFLÜGELFLUGZEUGS IM FALL EINES MOTORAUSFALLS
METHOD FOR REGULATING THE SPEED OF ROTATION OF THE MAIN ROTOR OF A MULTI-MOTOR ROTORCRAFT IN CASE OF FAILURE OF ONE OF THE ENGINES

(30) Priorité: 03.07.2014 FR 1401500
(43) Date de publication de la demande: 13.01.2016
(73) Titulaire: Airbus Helicopters, 13725 Marignane Cedex (FR)
(72) Inventeur: Vallart, Jean-Baptiste, 13001 Marseille (FR); Taheri, Setareh, 13100 AIX EN PROVENCE (FR)
(74) Mandataire: Pouillot, Laurent Pierre Paul

(56) Documents cités:
- EP-A2- 2 631 172
- EP-A2- 2 724 939
- FR-A1- 2 900 385
- US-A1- 2007 118 254

## Description

La présente invention est du domaine des méthodes de régulation du fonctionnement des moteurs d'un groupe de motorisation équipant les giravions multi-moteur. Ledit groupe de motorisation comprend notamment des moteurs principaux à combustion, turbomoteurs notamment, fournissant classiquement au giravion la puissance mécanique nécessaire pour procurer au moins l'entraînement d'un ou de plusieurs rotors équipant le giravion.

La présente invention s'inscrit plus spécifiquement dans le cadre d'une défection de l'un au moins desdits moteurs principaux du giravion procurant l'entraînement à une vitesse de consigne variable d'au moins un rotor principal du giravion, voire aussi procurant le cas échéant l'entraînement d'un rotor anticouple.

Le rotor principal procure typiquement au moins la sustentation du giravion, voire aussi sa propulsion et/ou son changement d'attitude en vol dans le cas spécifique d'un hélicoptère. Le rotor anticouple procure typiquement une stabilisation et un guidage du giravion en lacet et est couramment formé d'un rotor arrière ou d'au moins une hélice propulsive dans le cas d'un giravion à vitesses élevées d'avancement.

Classiquement, le fonctionnement des moteurs principaux du giravion est placé sous le contrôle d'une unité de régulation, telle qu'un FADEC (d'après l'acronyme anglais Full Authority Digital Engine Control). L'unité de régulation contrôle le dosage en carburant des moteurs principaux en fonction d'une consigne, ci-après désignée par consigne NR, relative à une vitesse de rotation requise du rotor principal. La consigne NR est générée et est transmise à l'unité de régulation par une unité de commande, telle qu'un AFCS (d'après l'acronyme anglais Automatic Flight Control System).

La consigne NR est couramment générée par l'unité de commande en fonction des besoins en puissance mécanique du giravion identifiée selon le cas de vol courant du giravion, et notamment en fonction des besoins en puissance mécanique pour entraîner le rotor principal. La puissance consommée par le rotor principal peut être par exemple identifiée à partir d'une évaluation du couple résistant que le rotor principal oppose à l'encontre de son entraînement par le groupe de motorisation.

Il est connu d'anticiper par calcul la puissance mécanique que devra fournir le groupe de motorisation pour répondre aux besoins du giravion, afin de procurer rapidement un entraînement du rotor principal à une vitesse de rotation conforme à la consigne NR. Le calcul par anticipation de la puissance mécanique nécessaire au giravion est par exemple identifiée à partir des commandes de vol opérées par un pilote du giravion, indifféremment pilote humain ou pilote automatique.

Les commandes de vol exploitées pour calculer par anticipation la puissance mécanique nécessaire au giravion comprennent notamment des commandes de variation du pas des pales du rotor principal, au moins collectivement voire aussi cycliquement. Dans le cas où le giravion est équipé d'un rotor arrière, il peut aussi être pris subsidiairement en compte une commande de vol provoquant une variation, notamment collective, du pas des pales du rotor arrière pour calculer par anticipation la puissance mécanique nécessaire au giravion.

Dans ce contexte, il se pose le problème d'une défection de l'un des moteurs principaux d'un giravion bimoteur ou de plusieurs moteurs principaux d'un giravion à plus de deux moteurs principaux. En effet dans ce cas, un seul moteur principal du giravion demeure potentiellement opérationnel pour fournir à lui seul la puissance mécanique nécessaire au giravion.

C'est pourquoi il a été défini des régimes spécifiques de régulation du fonctionnement des moteurs principaux, communément désignés par régimes OEI (d'après l'acronyme anglais One Engine Inoperative). Les régimes OEI sont appliqués pour réguler le fonctionnement d'un moteur principal fournissant à lui seul la puissance mécanique nécessaire au giravion en vol en cas de défection d'au moins un autre moteur principal d'un giravion multi-moteur. Les régimes OEI sont typiquement définis pour des phases de vol spécifiques conformément à une puissance mécanique donnée à fournir pour une période donnée par le moteur principal en évitant sa dégradation au-delà d'un seuil de dégradation toléré.

Divers régimes OEI sont potentiellement appliqués par l'unité de régulation, soit automatiquement (par un automate) soit sur requête du pilote humain du giravion conformément au manuel de vol. Les régimes OEI suivants sont couramment définis :
- régime OEI-très courte durée, selon lequel le ou les moteurs principaux opérationnels sont individuellement aptes à être exploités à un régime d'urgence pour une durée brève de l'ordre de 30 secondes.
- régime OEI-courte durée, selon lequel le ou les moteurs principaux opérationnels sont individuellement aptes à être exploités à un régime d'urgence pour une durée courte de l'ordre de 2 minutes à 3 minutes.
- régime OEI-longue durée, selon lequel le ou les moteurs principaux opérationnels sont individuellement aptes à être exploités à un régime maximum pour une durée longue, potentiellement illimitée.

La consigne NR est définie par l'unité de commande conformément à l'obtention d'une vitesse de rotation du rotor principal, ci-après désignée par vitesse NR.

La vitesse NR est traditionnellement prédéfinie sensiblement invariable, en pouvant varier selon l'attitude en vol du giravion tout au plus dans une plage restreinte de variation de vitesse de l'ordre de 5% d'une vitesse NR nominale, sans toutefois excéder une variation de l'ordre de 1% par seconde. L'impact d'une telle variation restreinte de la vitesse NR est négligeable sur la variation de la puissance mécanique que doivent fournir les moteurs principaux du giravion pour entraîner le rotor principal.

En effet une défection de l'un des moteurs principaux du giravion provoque une perte brutale de puissance mécanique apte à être fournie par le groupe de motorisation, et par suite provoque une baisse de la vitesse NR. Cependant à l'instant de la défection de l'un des moteurs principaux du giravion, la vitesse NR courante est sensiblement égale à la consigne NR courante et est encore suffisante pour permettre au pilote de contrôler classiquement l'attitude du giravion.

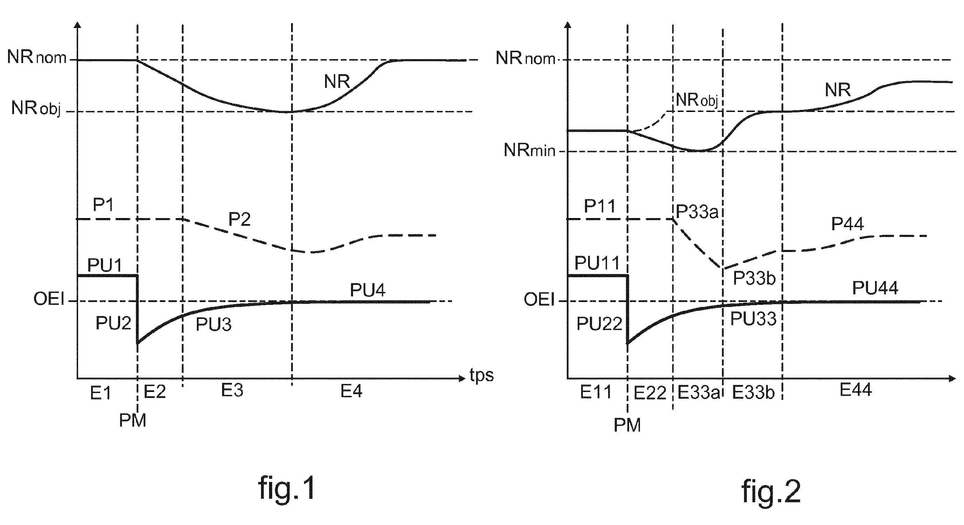

Plus particulièrement en se référant à la fig.1 des planches annexées, il est représenté schématiquement par rapport au temps (tps) l'évolution des évènements essentiels intervenant en cas de défection de l'un de moteurs principaux d'un giravion bimoteur.

Dans une première étape E1 illustrée, les moteurs principaux du giravion sont tous deux opérationnels et fournissent conjointement hors cas de défection de l'un des moteurs principaux, dit cas de panne-moteur PM, une puissance mécanique PU1 procurant un entraînement du rotor principal à une vitesse nominale NRnom sensiblement constante pour un pas courant P1 donné des pales du rotor principal. Dans un tel contexte, la vitesse NR d'entraînement du rotor principal est néanmoins susceptible de varier, pour un pas courant P1 donné des pales du rotor principal, dans une plage de valeur de l'ordre de 5% classiquement comprise entre 97% et 102% de la vitesse nominale NRnom.

En cas de panne-moteur PM de l'un des moteurs principaux, le giravion est brusquement placé dans une deuxième étape E2 préalablement à une quelconque réaction du pilote soudainement confronté au cas de panne PM. Un régime OEI de régulation du moteur principal restant seul en activité est immédiatement armé. Le régime OEI appliqué est classiquement automatiquement sélectionné et armé parmi divers régimes OEI applicables selon la phase de vol du giravion caractérisée par sa mécanique de vol selon ses conditions d'évolution, telles que selon son assiette, son altitude de progression et/ou sa vitesse d'avancement par exemple.

Au cours de cette deuxième étape E2, une baisse brutale de la puissance mécanique PU2 disponible est provoquée par suite de la défection de l'un des moteurs principaux et la vitesse NR du rotor principal chute compte tenu du pas courant P1 des pales du rotor principal inchangé en l'absence de réaction du pilote.

Le moteur principal demeurant opérationnel subit alors une accélération avec pour effet d'accroître la puissance mécanique PU3 qu'il fournit conformément au régime OEI sélectionné et armé appliqué par l'unité de régulation. Bien évidemment, il est compris par moteur principal demeurant opérationnel le moteur principal du giravion en activité à contrario du moteur principal défectueux.

Puis dans une troisième étape E3, le pilote réagit alors pour faire varier le pas collectif courant P2 des pales du rotor principal visant à affaiblir la puissance requise par le rotor principal. Une telle variation du pas collectif P2 permet progressivement de limiter puis de stopper le plus rapidement possible la chute de la vitesse NR du rotor principal, avant d'atteindre une vitesse seuil critique, ci-après désignée vitesse-objectif NRobj, d'une valeur constante de l'ordre de 97% de la vitesse nominale NRnom.

Dans une quatrième étape E4, le moteur principal demeurant opérationnel fournit une puissance mécanique PU4 conforme au régime OEI permettant de procurer un entraînement du rotor principal à la vitesse nominale NRnom sensiblement constante.

La sustentation stabilisée du giravion étant rétablie malgré la panne de l'un des moteurs principaux, le pilote intervient alors sur l'ensemble des commandes de vol pour placer le giravion conformément à un cas de vol stabilisé procurant une stabilisation du comportement global du giravion, tout en conservant au mieux constante la vitesse NR d'entraînement du rotor principal à la vitesse nominale NRnom. Un tel cas de vol stabilisé est communément reconnu lorsque les paramètres de vol du giravion sont invariants pour une progression stable du giravion.

Pour préciser la notion de sustentation stabilisée, la sustentation stabilisée d'un giravion est communément reconnue lorsqu'une chute du nombre de tours du rotor principal est stoppée, sous condition d'une sécurisation du giravion vis-à-vis de la résistance à l'effort subie par sa structure, étant bien évidemment compris que ladite chute du nombre de tours est provoquée indépendamment du contrôle du comportement du giravion par le pilote, indifféremment pilote humain ou pilote automatique, tel que dans le cas d'une défection de l'un des moteurs principaux du giravion dans le cadre de la présente invention.

De telles modalités d'intervention du pilote illustrées sur la fig.1 sont classiquement opérées selon les manuels de vol dans le cas d'une vitesse NR d'entraînement du rotor principal sensiblement constante et considérée invariable.

Selon l'équipement du giravion, un pilote automatique est potentiellement exploité pour rétablir rapidement la vitesse nominale NRnom du rotor principal en cas de défection de l'un des moteurs principaux, en générant des commandes automatiques de vol modifiant le pas collectif courant P2 des pales du rotor principal tel qu'illustré à la troisième étape E3 représentée sur la fig.1.

Cependant l'évolution des techniques dans le domaine des giravions tend à favoriser un entraînement du rotor principal à une vitesse NR commandée variable par rapport à la vitesse nominale NRnom prédéfinie selon les conditions de vol du giravion.

En effet, une telle variation significative de la vitesse NR d'entraînement du rotor principal est par exemple exploitée pour réduire les nuisances sonores du giravion et/ou pour améliorer ses performances dans certaines phases de vol. A titre indicatif, la vitesse du rotor principal peut être commandée variable entre 5% et 10% de la vitesse nominale NRnom, voire potentiellement davantage selon l'évolution des techniques, et plus particulièrement peut être commandée variable selon une plage de valeurs potentiellement comprise entre 93% et 107% de la vitesse nominale NRnom.

On pourra à ce propos se reporter par exemple à la publication « Enhanced energy maneuverability for attack helicopters using continuous variable rotor speed control » (C.G. SCHAEFER Jr ; F.H. LUTZE, Jr) ; 47th forum American Helicopter Society 1991 ; p. 1293-1303. Selon ce document, les performances d'un giravion en situation de combat sont améliorées en faisant varier la vitesse d'entraînement du rotor principal selon une variation de la vitesse air du giravion.

On pourra aussi se reporter par exemple au document US6198991 (YAMAKAWA et al.), qui propose de réduire les nuisances sonores générées par un giravion en approche d'un point de posé en faisant varier la vitesse de rotation du rotor principal.

On pourra encore à ce propos se reporter par exemple au document US2007118254 (BARNES G.W. et al.), qui propose de faire varier la vitesse de rotation du rotor principal d'un giravion, selon deux valeurs considérées comme basse et haute, sous conditions prédéfinies de seuils de valeurs de divers paramètres liés à des conditions de vol du giravion préalablement identifiées.

Le document EP2724939 décrit un procédé de gestion d'une panne moteur sur un aéronef à voilure tournante muni d'une installation motrice hybride comportant au moins deux moteurs thermiques. Ce procédé permet au pilote de manoeuvrer l'aéronef avec une puissance motrice, sans pour autant solliciter le moteur thermique resté opérationnel. Un boîtier électronique de contrôle EECU est relié à chaque moteur thermique et un moyen de stockage d'énergie électrique alimente une machine électrique pour que le rotor principal soit entrainé par l'installation motrice hybride.

Le document FR2900385 décrit un procédé de pilotage d'un giravion qui comporte plusieurs moteurs d'entraînement d'au moins un rotor d'avance et de sustentation. Selon ce procédé, tant que le giravion n'a pas atteint une vitesse de montée optimale, est déterminée une commande en tangage telle que le giravion accélère selon un profil qui varie au cours du décollage, d'une part en fonction du temps écoulé et d'autre part en fonction de l'état de fonctionnement des moteurs.

Par exemple encore, on pourra aussi se reporter à ce propos au document WO2010143051 (AGUSTA SPA et al.), qui propose de faire varier la vitesse de rotation d'un rotor principal équipant un giravion conformément à une cartographie préalablement établie selon diverses conditions de vol du giravion.

Il se pose alors le problème des modalités d'intervention sur le comportement du giravion en cas de défection de l'un des moteurs principaux, compte tenu d'un entraînement du rotor principal à une vitesse NR potentiellement basse par rapport à la vitesse nominale NRnom, telle que pouvant être au moins inférieure à 7% de la vitesse nominale NRnom. En effet dans ce cas, le rétablissement par le pilote d'un entrainement du rotor principal à une vitesse NR conforme à la consigne NR est beaucoup plus délicat à effectuer.

Par suite, il apparaît opportun de procurer au pilote humain d'un giravion bimoteur une assistance automatisée pour rétablir un entraînement du rotor principal en cas de défection de l'un des moteurs principaux, dans le contexte d'un possible entraînement du rotor principal à une vitesse NR potentiellement basse par rapport à la vitesse nominale NRnom à l'instant où intervient ladite défection de l'un des moteurs principaux.

Il est connu un environnement technologique de l'invention appliqué à un giravion monomoteur, selon lequel une assistance automatisée est procurée au pilote humain du giravion pour placer le rotor principal en autorotation en cas de défection du moteur principal.

Une telle assistance est procurée par un dispositif automatique générateur de commandes de vol modifiant, en cas de défection du moteur principal, l'attitude du giravion en verticalité, en tangage, en roulis et/ou en lacet, pour contrebalancer les effets aérodynamiques défavorables qui font immédiatement suite à une défaillance du moteur principal.

On pourra par exemple se reporter à ce propos aux documents FR2601326 (UNITED TECHNOLOGIES CORPORATION), FR2864028 (EUROCOPTER S.A.S.) et US20130221153 (BELL HELICOPTER TEXTRON).

Dans ce contexte, la présente invention a pour objet une méthode de régulation de la vitesse de rotation, dite vitesse NR, d'au moins un rotor principal d'un giravion multi-moteur en cas, dit cas de panne-moteur, de défection de l'un des moteurs principaux à combustion d'un groupe de motorisation équipant le giravion.

Le dit groupe de motorisation fournit classiquement au giravion la puissance mécanique nécessaire au moins à l'entraînement en rotation du principal.

La méthode de la présente invention est appliquée dans le cadre, hors cas de panne-moteur, d'un entraînement par le groupe de motorisation dudit au moins un rotor principal conformément à l'application d'une consigne de vitesse, dite consigne NR, dont la valeur est calculée variable par une unité de commande selon les conditions de vol courantes du giravion.

Dans ce contexte, la valeur de la consigne NR varie potentiellement dans une plage de valeurs proportionnelles à la valeur d'une vitesse nominale prédéfinie d'entraînement du rotor principal, à titre indicatif dans une plage de valeurs comprise entre 93% et 107% de la valeur de la vitesse nominale.

Il est plus particulièrement visé par la présente invention de proposer une telle méthode apte à assister un pilote humain du giravion dans le cas où une panne-moteur intervient alors que la vitesse d'entraînement du rotor principal est potentiellement significativement basse par rapport à ladite vitesse nominale.

Dans le cadre de la présente invention, le giravion est équipé d'au moins un organe de commande manuelle de vol générant, par suite de son entraînement par l'homme, des commandes manuelles de vol provoquant une variation du pas des pales dudit au moins un rotor principal. Le giravion est aussi équipé d'un pilote automatique générateur de commandes automatiques de vol provoquant une variation du pas des pales du dit au moins un rotor principal.

Le giravion est aussi équipé de ladite unité de commande fournissant ladite consigne NR à une unité de régulation du fonctionnement individuel des moteurs principaux pour entraîner le rotor principal à une vitesse NR conforme à la consigne NR.

L'unité de régulation applique en cas de panne-moteur un régime de régulation, dit régime OEI, du fonctionnement d'au moins un moteur principal demeurant opérationnel. Tel que classiquement, ledit régime OEI est sélectionné et appliqué par l'unité de régulation selon une phase de vol identifiée du giravion parmi une pluralité de régimes OEI prédéfinis.

Dans ce contexte, la méthode de la présente invention est principalement reconnaissable en ce qu'elle comprend les opérations détaillées ci après :
Dans le cas où un cas de panne-moteur est identifié par l'unité de régulation, l'unité de régulation applique ledit régime OEI et transmet à l'unité de commande une donnée, dite donnée de panne-moteur, relative à l'identification du cas de panne-moteur par l'unité de régulation.

Puis, par suite de la réception par l'unité de commande de ladite donnée de panne-moteur, l'unité de commande génère ladite consigne NR selon une valeur au moins, et de préférence, égale à la valeur de ladite vitesse nominale.

Dans ce contexte, le giravion est potentiellement dans un cas de vol favorable selon lequel la valeur de la consigne NR courante est supérieure ou égale à la valeur de la vitesse nominale d'entraînement du rotor principal. Il est considéré que dans un tel cas de vol favorable, la génération par l'unité de commande de ladite qu'une consigne NR d'une valeur au moins égale à ladite vitesse nominale est adaptée pour favoriser l'obtention rapide d'une progression stabilisée du giravion, au moins en ce qui concerne l'obtention rapide d'une sustentation stabilisée du giravion.

Cependant dans le cadre de la présente invention, la valeur de la vitesse NR courante peut être significativement inférieure à la valeur de la vitesse nominale, tel que notamment inférieure à 97% de la vitesse nominale. Dans un tel cas de vol défavorable, la difficulté pour le pilote humain d'obtenir une sustentation stabilisée du giravion est accrue par rapport audit cas de vol favorable. Le pilote humain étant en situation délicate, il est proposé, par suite de la réception par l'unité de commande de ladite donnée de panne-moteur, d'assister le pilote humain dans le contrôle de l'attitude en vol du giravion.

Plus particulièrement dans ledit cas de vol défavorable selon lequel la valeur de la vitesse NR courante est inférieure à la valeur de la vitesse nominale, un calculateur calcule itérativement une vitesse d'entraînement du rotor principal, dite vitesse-objectif.

La vitesse-objectif est calculée itérativement :
- par identification, selon le cas de vol courant du giravion, d'une part de la puissance mécanique disponible apte à être fournie par le groupe de motorisation conformément au régime OEI courant et d'autre part de la portance courante procurée par le rotor principal, notamment déterminée conformément aux commandes de vol courantes générées par le pilote, indifféremment pilote humain ou pilote automatique, puis
- par identification d'une portance maximale apte à être procurée par le rotor principal sous condition d'e l'obtention d'une sustentation stabilisée du giravion, à partir d'une vitesse NR apte à être atteinte dans un laps de temps le plus bref possible depuis la vitesse NR courante vers la vitesse-objectif, bien évidemment sous conditions d'une progression sécurisée du giravion.

Dans un tel contexte, ladite vitesse-objectif est non prédéterminée en étant de préférence calculée itérativement à une fréquence donnée, de l'ordre de 40 fois par seconde par exemple, et en étant variable selon le cas de vol courant du giravion à chacune des séquences de calcul de la vitesse-objectif.

Un tel calcul itératif de la vitesse objectif est fondé sur la base d'une répartition de ladite puissance mécanique disponible entre le couple moteur entraînant le rotor principal et la vitesse NR d'entraînement du rotor principal de sorte que la portance procurée par le rotor principal soit optimisée le plus rapidement possible pour minimiser la perte de hauteur-sol du giravion.

Il est à noter que ledit calculateur est potentiellement intégré à un quelconque moyen de calcul équipant le giravion, tel que notamment intégré au pilote automatique, voire de préférence à l'unité de régulation.

Puis dans le cas où la vitesse NR courante est inférieure à la vitesse-objectif, le pilote automatique génère des commandes automatiques de vol provoquant une variation du pas des pales du rotor principal jusqu'à obtention d'un entraînement du rotor principal à ladite vitesse-objectif.

Dans ces conditions en cas de panne-moteur, la prise en compte d'une vitesse d'entraînement du rotor principal pouvant être significativement inférieure à la vitesse nominale est quasi-instantanément opérée par le calculateur.

En l'absence de réaction du pilote soudainement confronté à un cas de panne-moteur, l'unité de régulation génère dans un premier temps une consigne NR d'une valeur au moins égale à ladite vitesse nominale et le calculateur calcule itérativement la vitesse-objectif exploitée par le pilote automatique pour générer des commandes automatiques de vol procurant rapidement la sustentation stabilisée du giravion.

La sustentation stabilisée du giravion est obtenue sans obligatoirement entraîner le rotor principal à une vitesse conforme à la vitesse nominale. En effet, le temps requis pour atteindre une stabilisation de la sustentation du giravion à partir d'une vitesse d'entraînement du rotor principal potentiellement basse est écourté, par génération itérative de la vitesse-objectif par le calculateur, sous dépendance de laquelle vitesse-objectif sont générées les commandes de vol par le pilote automatique procurant le plus rapidement possible ladite sustentation stabilisée.

Il en ressort finalement que malgré un entraînement du rotor principal à une vitesse potentiellement basse, le pilote humain est assisté en cas de panne-moteur dans le pilotage du giravion avant toute réaction humainement possible. L'assistance au pilotage fournie procure une évolution du giravion sous conditions favorables de vol à partir de l'obtention d'une sustentation stabilisée du giravion sous contrôle du calculateur.

Il est de préférence proposé après stabilisation de la sustentation du giravion de générer des commandes de vol procurant un cas de vol stabilisé du giravion. Un tel cas de vol stabilisé est classiquement obtenu en générant des commandes de vol faisant varier au moins le pas des pales du rotor principal, voire aussi le cas échéant activant la mise en oeuvre d'un dispositif anticouple tel que classiquement formé au moins par un rotor annexe.

Cependant après la période nécessaire à la stabilisation de la sustentation du giravion, le pilote humain est potentiellement apte à réagir. C'est pourquoi il est choisi d'opérer les commandes de vol procurant le cas de vol stabilisé soit manuellement par le pilote humain soit automatiquement par le pilote automatique armé en au moins un mode supérieur de fonctionnement procurant un guidage du giravion selon ses différents axes de progression, tels que typiquement au moins en tangage, en roulis et en lacet voire aussi en verticalité.

A cet effet selon une forme de l'invention et par suite de l'obtention de ladite sustentation stabilisée du giravion, le pilote automatique est potentiellement armé dans un mode de fonctionnement selon lequel le pilote automatique calcule un cas de vol stabilisé du giravion et génère des commandes automatiques de vol conformes au dit cas de vol stabilisé. Tel que visé plus loin, le pilote automatique est potentiellement pré-armé ou est armé sur requête du pilote dans un tel mode de fonctionnement identifiant ledit cas de vol stabilisé.

De préférence, ledit cas de vol stabilisé est calculé par le pilote automatique conformément à un avancement du giravion à des vitesses moyennes, à titre indicatif à une vitesse d'avancement du giravion comprise entre 45 kt (45 noeuds) et 100 kt (100 noeuds). En effet, il est choisi d'identifier ledit cas de vol stabilisé conformément à une vitesse d'avancement du giravion susceptible de consommer une puissance mécanique la plus faible possible.

En outre, le cas de vol stabilisé est potentiellement calculé par le pilote automatique par prise en compte au moins de l'un au moins des paramètres de vol du giravion comprenant la hauteur-sol courante du giravion, la vitesse-air courante du giravion et la température de l'air extérieur ambiant environnant le giravion.

Selon une forme avantageuse de réalisation, ledit cas de vol stabilisé du giravion est calculé à partir d'une sélection par le pilote automatique d'une phase de vol à atteindre parmi plusieurs phases de vol préalablement répertoriées et par exemple mémorisées dans une base de données, notamment en prenant en compte la phase de vol courante du giravion.

Selon des exemples non exhaustifs de mise en oeuvre de la méthode de l'invention, le pilote automatique calcule ledit cas de vol stabilisé au moins selon les modalités suivantes :
- en phase de vol du giravion proche du sol, à titre indicatif de l'ordre inférieure à 30 ft (30 pieds), le pilote automatique calcule le cas de vol stabilisé conformément à un guidage du giravion selon une procédure de poser du giravion,
- en phase de décollage automatique du giravion selon lequel le giravion est guidé par le pilote automatique selon une procédure préétablie de décollage, le cas de vol stabilisé est calculé par le calculateur conformément à un guidage du giravion en procédure de décollage.

De préférence, le pilote automatique calcule ledit cas de vol stabilisé conformément à l'application d'une consigne NR d'une valeur au moins égale à un seuil de vitesse. La valeur dudit seuil de vitesse est notamment prédéfinie selon une vitesse minimale tolérée d'entraînement du rotor principal procurant un vol sécurisé du giravion, telle que de préférence de l'ordre de 97% de la vitesse nominale.

Par ailleurs, l'armement du pilote automatique en mode de calcul dudit cas de vol stabilisé est potentiellement provoqué selon les modalités alternatives suivantes :
- par une commande manuelle d'armement opérée par un pilote humain placé en situation de pouvoir réagir sur le comportement du giravion par suite de l'obtention de la sustentation stabilisée du giravion,
- par une commande automatique d'armement générée par suite de la génération par l'unité de régulation de ladite donnée de panne-moteur,
- par un état de pré-armement du pilote automatique préalablement à un éventuel cas de panne-moteur, afin de procurer au pilote humain une plage de temps de réaction optimisée.

Le pilote automatique étant armé en mode de calcul dudit cas de vol stabilisé, un désarmement du pilote automatique hors mode de calcul est opérable par le pilote humain du giravion générant une commande manuelle de désarmement.

Selon une autre forme de réalisation et par suite de l'obtention de ladite sustentation stabilisée du giravion, le pilote humain du giravion génère des commandes manuelles de vol procurant un guidage en vol stabilisé du giravion conformément à l'application d'une procédure d'urgence préétablie et consignée au manuel de vol.

Ladite procédure d'urgence est conforme à un guidage en vol stabilisé du giravion placé dans des conditions défavorables d'évolution définies conformément à une évolution du giravion en altitude, à titre indicatif à une hauteur-sol supérieure à 500 ft (500 pieds), à une température élevée de l'air extérieur ambiant environnant le giravion, à titre indicatif à une température de l'ordre d'au moins 30°C (30° Celcius), et à un entraînement du rotor principal à une vitesse NR basse de rotation, notamment considérée inférieure à 97% de la vitesse nominale.

La prise en compte de ladite procédure d'urgence permet de répondre au mieux à l'obtention d'une évolution sécurisée du giravion quelles que soient les conditions courantes d'évolution du giravion. En effet la procédure d'urgence est avantageusement définie unique et applicable à l'ensemble des conditions de vol courantes du giravion en cas de panne-moteur, pour éviter de complexifier le travail du pilote humain placé en situation d'urgence par suite de la défection de l'un des moteurs principaux du giravion.

Par ailleurs, l'application d'une consigne NR à une valeur au moins égale audit seuil de vitesse est de préférence opérée par limitation d'une variation du pas des pales du rotor principal vis-à-vis d'un seuil de pas des pales du rotor principal prédéfini.

Selon une forme de réalisation, l'un quelconque au moins des organes de commande manuelle de vol provoquant une variation du pas des pales du rotor principal est avantageusement équipé d'un dispositif générateur de signaux tactiles. Le dispositif générateur de signaux tactiles produit au moins un premier signal tactile par suite d'une identification selon la mécanique de vol du giravion d'un pas des pales du rotor principal équivalent audit seuil de pas.

Selon une forme de réalisation, le dispositif générateur de signaux tactiles est potentiellement générateur d'un deuxième signal tactile par suite d'une identification selon la mécanique de vol du giravion d'un pas des pales du rotor principal supérieur audit seuil de pas. De telles dispositions visent à indiquer au pilote humain un franchissement des limites de puissance mécanique définies selon le régime OEI courant appliqué par l'unité de régulation.

Le dispositif générateur de signaux tactiles est par exemple un dispositif générateur de vibrations. Par exemple encore, le dispositif générateur de signaux tactiles est un dispositif opposant un effort résistant à l'encontre de l'entraînement par le pilote humain de l'organe de commande manuelle de vol.

Par ailleurs, le groupe de motorisation comprend potentiellement au moins un moteur auxiliaire. Dans ce cas et sous réserve d'une identification par l'unité de commande d'un déficit de puissance consommée par le rotor principal vis-à-vis de l'obtention rapide d'une sustentation stabilisée du giravion, l'unité de régulation est génératrice d'une requête de mise en oeuvre dudit au moins un moteur auxiliaire.

Selon divers exemples de réalisation, ledit au moins un moteur auxiliaire est indifféremment une machine électrique et/ou une unité auxiliaire de puissance (APU).

Il est rappelé que ladite unité auxiliaire de puissance, dite APU (d'après l'acronyme anglais Auxiliary Power Unit), est typiquement constituée d'un moteur auxiliaire à combustion, turbomoteur notamment, dont le fonctionnement est contrôlé par l'unité de régulation. Un tel moteur auxiliaire est typiquement dimensionné pour procurer la puissance mécanique nécessaire à l'entraînement d'organes auxiliaires du giravion (compresseurs, machines électriques, équipements de servitude par exemple) lorsque le giravion est au sol, en étant inapte à entraîner seul le ou les rotors du giravion en vol, notamment en cas de panne-moteur.

Cependant, il peut être opportun d'exploiter le moteur auxiliaire pour participer en vol à l'entraînement du rotor principal en fournissant, dans certaines phases de vol spécifiques du giravion, un appoint de puissance mécanique en complément de la puissance mécanique essentiellement fournie par les moteurs principaux quant à eux dimensionnés pour pouvoir entraîner en vol le ou les rotors du giravion, le cas échéant isolément en cas de panne-moteur.

Dans ce contexte, il est compris que le fonctionnement du moteur auxiliaire n'est pas soumis aux régimes OEI de régulation en cas de défection de l'un des moteurs principaux.

Selon une forme préférée de réalisation, l'unité de régulation est génératrice d'une commande de régulation du fonctionnement individuel de chacun des moteurs principaux prenant en compte au moins d'une part la consigne NR et d'autre part une anticipation de la puissance mécanique à fournir par le groupe de motorisation typiquement identifiée selon la mécanique du vol du giravion provoquant au moins une variation du pas des pales au moins de la voilure du rotor principal.

Il est par ailleurs compris que l'armement du pilote automatique en mode secondaire de fonctionnement est distinct et ne fait pas obstacle à un armement potentiellement simultané du pilote automatique en au moins un mode supérieur de fonctionnement procurant un guidage automatique du giravion selon l'un quelconque au moins de ses axes de progression.

Un exemple de réalisation de la présente invention va être décrit en relation avec les figures des planches annexées, dans lesquelles :
- la fig.1 est une représentation schématique par rapport au temps (tps) de l'évolution, selon l'art antérieur, des évènements essentiels intervenant en cas de panne de l'un des moteurs principaux d'un giravion bimoteur, précédemment commentée.
- la fig.2 est une représentation schématique par rapport au temps (tps) de l'évolution, selon un exemple de réalisation de l'invention, des évènements essentiels intervenant en cas de panne de l'un de moteurs principaux d'un giravion bimoteur.
- la fig.3 est un schéma détaillant les modalités mises en oeuvre conformément à l'exécution d'une méthode de la présente invention selon une forme préférée de réalisation.

Sur la fig.2, le rotor principal d'un giravion G bimoteur est entraîné hors cas de panne-moteur à une vitesse, dite vitesse NR, significativement inférieure à une vitesse nominale NRnom prédéfinie. En effet, le rotor principal du giravion G est potentiellement entraîné à une vitesse NR variable sous contrôle d'une unité de commande prenant en compte les conditions de vol du giravion, telle que les paramètres physicochimiques de l'air ambiant environnant le giravion, sa vitesse d'avancement ou sa hauteur-sol par exemple.

De telles dispositions visent à favoriser aux besoins les performances du giravion G, notamment en vol stationnaire voire aussi en vol de croisière, et/ou pour réduire les nuisances sonores générées par le giravion G selon des phases de vol spécifiques, telles que notamment en phase d'approche par le giravion d'un point de poser.

Tel que dans le contexte illustré sur la fig.1 dans une première étape E11, les moteurs principaux du giravion G sont tous deux opérationnels et fournissent conjointement hors cas de panne-moteur PM une puissance mécanique PU11 procurant un entraînement du rotor principal à une vitesse NR sensiblement constante à un instant donné pour un pas courant P1 donné des pales du rotor principal.

En cas de panne-moteur PM de l'un des moteurs principaux, le giravion G est brusquement placé dans une deuxième étape E22 préalablement à une quelconque réaction du pilote soudainement confronté au cas de panne-moteur PM.

Un régime OEI de régulation du moteur principal opérationnel restant seul en activité est immédiatement armé en étant classiquement appliqué par une unité de régulation. Le régime OEI appliqué est automatiquement sélectionné et armé parmi divers régimes OEI applicables selon la phase de vol du giravion G.

Au cours de cette deuxième étape E22, une baisse brutale de la puissance mécanique PU22 disponible est provoquée compte tenu de la défection de l'un des moteurs principaux en situation de panne-moteur PM. Par suite, le pas courant P11 des pales du rotor principal étant maintenu constant en l'absence de réaction du pilote, la vitesse NR de rotation du rotor principal chute.

Cependant compte tenu d'un entraînement du rotor principal à une vitesse NR significativement inférieure à la vitesse nominale NRnom, le pilote humain est placé en situation particulièrement délicate pour parvenir à stabiliser la progression du giravion G.

En effet, la vitesse NR d'entraînement du rotor principal est potentiellement proche d'une valeur minimale NRmini admise et le laps de temps utile au rétablissement d'une progression du giravion sous conditions de vol sécurisé est potentiellement très bref.

Dans ce contexte, il est proposé d'assister le pilote humain pour placer le giravion sous conditions de vol sécurisé en cas de panne-moteur.

Il est plus particulièrement fait le choix de procurer dans un premier temps une stabilisation de la sustentation du giravion procurée par le rotor principal, puis dans un deuxième temps de contrôler la manoeuvre de la mécanique de vol du giravion, indifféremment par le pilote humain ou par un pilote automatique équipant le giravion, conformément à l'application d'un cas de vol stabilisé du giravion procurant une stabilisation de la progression du giravion depuis le cas de vol courant suivant l'ensemble de ses axes de progression.

Dans un cas de vol favorable non illustré selon lequel la vitesse NR d'entraînement du rotor principal est égale ou supérieure à la vitesse nominale NRnom, la vitesse NR courante d'entraînement du rotor principal est maintenue.

Dans ce cas, l'unité de commande maintient la génération d'une consigne, dite consigne NR, et le pilote du giravion peut générer des commandes de vol provoquant une augmentation du couple consommé par le rotor principal conformément à une exploitation maximale de la puissance mécanique disponible fournie par le moteur principal maintenu en fonctionnement, ayant subsidiairement pour effet de réduire la vitesse NR.

Cependant tel qu'illustré sur la fig.2, il est potentiellement identifié un cas de vol défavorable selon lequel la vitesse NR d'entraînement du rotor principal est significativement inférieure à la vitesse nominale NRnom à l'instant où le cas de panne-moteur intervient.

Dans ce cas dans une troisième étape E33a, le pas P33a des pales du rotor principal est rapidement modifié par un pilote automatique équipant le giravion par suite d'une requête émise par l'unité de commande d'une consigne NR d'une valeur égale voire supérieure à la vitesse nominale NRnom. Cette première étape permet de ralentir immédiatement la baisse du nombre de tours du rotor principal.

Par ailleurs, un calculateur mis en oeuvre dès la détection du cas de panne moteur calcule une vitesse, dite vitesse-objectif NRobj, d'entraînement du rotor principal conformément à l'exploitation d'une puissance mécanique donnée fournie par le groupe de motorisation conforme au régime OEI courant appliqué. La vitesse-objectif est identifiée selon le cas de vol courant du giravion, par prise en compte d'une combinaison de critères dont les valeurs respectives sont calculées itérativement par le calculateur. Lesdits critères comprennent une durée la plus brève possible d'obtention d'une vitesse-objectif NRobj pour un couple consommée par le rotor principal procurant une sustentation stabilisée du giravion.

A partir de la vitesse-objectif NRobj calculée par le calculateur, le pilote automatique, armé dans un mode de fonctionnement spécifique calcule le pas P33b collectif des pales du rotor principal à appliquer pour obtenir le plus rapidement possible ladite sustentation stabilisée du giravion, et génère des commandes automatiques de vol provoquant une variation collective du pas des pales du rotor principal conforme au pas P33b calculé par le pilote automatique, tel qu'illustrée à l'étape E33b.

Dans ces conditions au cours des étapes E22 dans un premier temps, puis E33a et E33b dans un deuxième temps, la puissance mécanique PU33 fournie par le moteur opérationnel s'accroît progressivement jusqu'à parvenir à une puissance mécanique PU44 conforme au régime OEI.

A l'issue de l'étape E33b dans laquelle la sustentation du giravion est stabilisée, la vitesse NR d'entraînement du rotor principal est maintenue supérieure à la vitesse-objectif NRobj et la puissance mécanique PU44 est conforme à l'application du régime OEI courant. A ce stade, le pilote humain est potentiellement apte à réagir et peut choisir d'opérer des commandes manuelles de vol visant à placer le giravion dans un cas de vol stabilisé suivant l'ensemble de ses axes de progression, notamment en tangage, en roulis, en lacet voire aussi en verticalité.

Dans ce contexte non représenté, les commandes manuelles de vol opérées par le pilote sont conformes à l'application d'une procédure d'urgence typiquement consignée au manuel de vol et relative aux actions que le pilote humain doit effectuer pour stabiliser la progression du giravion en cas de panne-moteur. La procédure d'urgence est avantageusement établie conformément à des conditions de vol particulièrement défavorables en cas de panne-moteur, telles que typiquement conformément à une évolution du giravion à une hauteur-sol de l'ordre de 500 ft, à une température élevée de l'air extérieur ambiant environnant le giravion de l'ordre supérieure à 30 C et/ou selon un entraînement du rotor principal à une vitesse basse de rotation notamment inférieure à 97% de la vitesse nominale NRnom.

Toujours à l'issue de l'étape E33b et tel qu'illustré sur la fig.2 au cours d'une étape suivante E44, le pilote automatique est potentiellement armé en un mode de calcul d'un cas de vol stabilisé du giravion. Le cas de vol stabilisé du giravion étant identifié par le pilote automatique, la consigne NR générée par l'unité de commande et des commandes automatiques de vol générées par le pilote automatique modifient le pas P44 des pales, au moins du rotor principal voire aussi d'un rotor annexe anticouple pour placer le giravion dans des conditions de vol conformes au cas de vol stabilisé identifié par le pilote automatique.

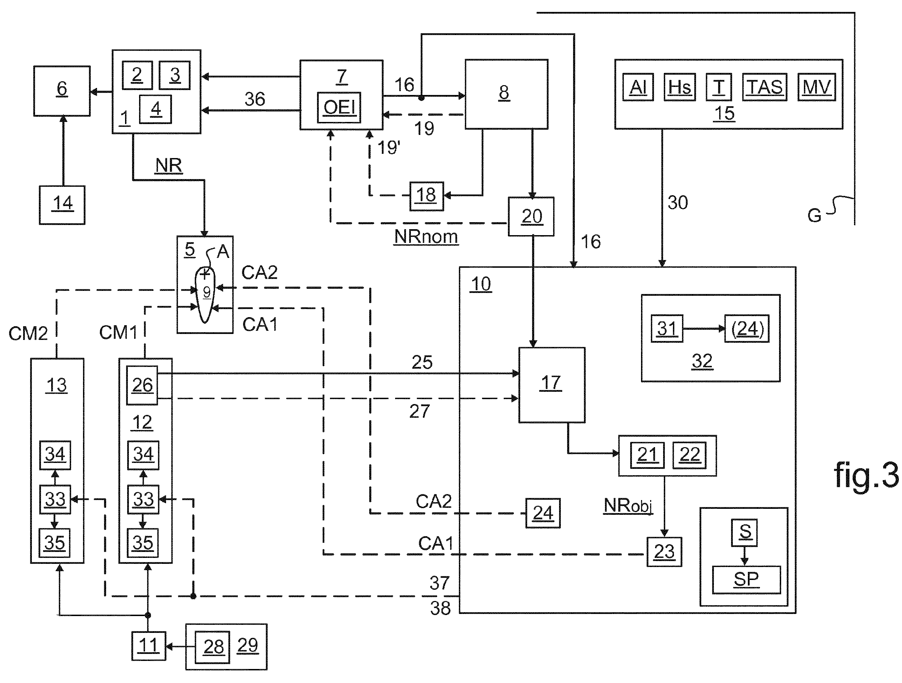

Différentes opérations d'une méthode préférée de la présente invention procurant une régulation du fonctionnement d'un groupe de motorisation d'un giravion bimoteur conformément aux dispositions de l'invention représentées sur la fig.2 et précédemment commentées, sont détaillées sur la fig.3.

Sur la fig.3, un giravion bimoteur est équipé d'un groupe de motorisation 1 comprenant deux moteurs principaux 2,3 et au moins un moteur auxiliaire 4. Le groupe de motorisation 1 est exploité pour entraîner les organes du giravion consommateurs de puissance mécanique, dont un ou plusieurs rotors 5,6. Les rotors du giravion comprennent notamment au moins un rotor principal 5 procurant au moins la sustentation du giravion et au moins un rotor annexe 6 procurant au moins la stabilisation et le guidage en lacet du giravion.

Dans ce contexte tel que classiquement, les moteurs principaux 2,3 sont dimensionnés pour être aptes à entraîner le ou les rotors 5,6 du giravion en cas de panne de l'un des moteurs principaux 2,3.

A contrario, le moteur auxiliaire 4 est d'un dimensionnement trop faible pour lui conférer seul une telle aptitude à entraîner seul le ou les rotors 5,6 du giravion. Un tel moteur auxiliaire est potentiellement formé d'une machine électrique et/ou d'un moteur à combustion formant une unité auxiliaire de puissance communément désignée par APU.

Le fonctionnement du groupe de motorisation 1 est contrôlé par une unité de régulation 7 conformément à une consigne de vitesse, dite consigne NR 19, générée par une unité de commande 8 et relative à une vitesse d'entraînement requise du rotor principal 5. Tel que précédemment visé, la vitesse NR d'entraînement du rotor principal 5 est susceptible de varier significativement par rapport à une vitesse nominale NRnom conformément à l'application de la consigne NR 19 générée par l'unité de commande 8.

Par ailleurs, une modification de l'attitude du giravion peut être effectuée par un pilote générant des commandes de vol modifiant le pas des pales 9 des voilures du ou des rotors 5,6. A cet effet, lesdites pales 9 sont manoeuvrées par des chaînes cinématiques autour d'un axe de variation de pas A.

Classiquement, les pales 9 du rotor principal 5 sont manoeuvrables autour de leur axe de variation de pas A collectivement pour faire modifier l'altitude du giravion et/ou cycliquement pour modifier l'attitude du giravion en tangage et en roulis. Les pales du rotor annexe 6 sont classiquement manoeuvrables collectivement autour de leur axe de variation de pas pour stabiliser et guider le giravion en lacet.

Le pilote du giravion est potentiellement un pilote automatique 10 générant des commandes automatiques de vol ou un pilote humain 11 générant des commandes manuelles de vol CM1, CM2 par entraînement d'organes de commande manuelle de vol 12,13,14.

Les organes de commande manuelle de vol comprennent typiquement un levier de pas 12 permettant au pilote humain 11 de modifier collectivement les pales 9 du rotor principal 5, un manche cyclique 13 permettant au pilote humain 11 de modifier cycliquement le pas des pales 9 du rotor principal 5 et un palonnier 14 permettant au pilote humain 11 de modifier collectivement le pas des pales du rotor annexe 6.

L'attitude en vol du giravion peut ainsi être modifiée par l'intermédiaire de la mécanique de vol du giravion actionnée sous l'effet des commandes de vol indifféremment générées par le pilote humain 11 ou par le pilote automatique 10.

Le giravion est aussi classiquement équipé d'une instrumentation de bord 15 fournissant diverses informations relatives aux conditions de vol du giravion, telles que par exemple l'altitude Al et/ou la hauteur-sol Hs, la température T de l'air extérieur ambiant environnant le giravion, la vitesse d'avancement TAS du giravion et/ou le positionnement de la mécanique de vol MV.

Dans ce contexte, en cas de panne-moteur de l'un des moteurs principaux 2,3, l'unité de régulation 7 contrôle le fonctionnement du moteur principal 2,3 encore opérationnel conformément à l'application d'un régime OEI. Le régime OEI appliqué par l'unité de régulation 7 est sélectionné selon les conditions et/ou phases de vol du giravion parmi plusieurs régimes OEI prédéfinis, tels que classiquement un régime OEI très courte durée, un régime OEI courte durée ou un régime OEI longue durée.

En cas de panne-moteur, l'unité de régulation 7 transmet à l'unité de commande 8 une donnée de panne-moteur 16 relative à la détection dudit cas de panne-moteur. Selon différents cas de vol, un calculateur 17 intervient pour modifier le comportement du giravion.

Dans un cas favorable 18 selon lequel le rotor principal 5 est entraîné à une vitesse NR de rotation égale ou supérieure à la vitesse nominale NRnom, la consigne NR 19' générée par l'unité de commande 8 est au moins égale, voire supérieure, à la vitesse nominale NRnom. Les manoeuvres en variation de pas des pales 9 du ou des rotors 5,6 sont alors opérées pour stabiliser l'attitude en vol du giravion, notamment par le pilote humain 11 tel qu'illustré sur la fig.1 voire potentiellement par le pilote automatique 9.

Cependant dans un cas défavorable 20 selon lequel le rotor principal 5 est entraîné à une vitesse de rotation significativement basse par rapport à la vitesse nominale NRnom, l'unité de commande 8 génère une consigne NR 19 dont la valeur est au moins la valeur de la vitesse nominale NRnom. Puis, le calculateur 17 est mis en oeuvre pour dans un premier temps stabiliser le plus rapidement possible la sustentation procurée par le rotor principal 5.

A cet effet, le calculateur 17 calcule itérativement ladite vitesse-objectif NRobj visée dans les commentaires de la fig.2. La vitesse-objectif NRobj est itérativement calculée compte tenu du cas de vol courant du giravion, pour identifier les conditions d'obtention d'une sustentation stabilisée du giravion dans un laps de temps le plus bref possible.

La vitesse-objecif NRobj est itérativement calculée à partir d'une identification d'une combinaison entre un couple consommé 21 par le rotor principal compatible et un laps de temps 22 le plus bref défini selon la rapidité d'accroissement obtenue de la vitesse d'entraînement du rotor principal 5 depuis sa vitesse d'entraînement courante vers ladite vitesse objectif NRobj, la vitesse-objectif itérativement calculée étant inférieure à la vitesse nominale NRnom et supérieure à la vitesse NR courante d'entraînement du rotor principal 5.

Dans le cas où la vitesse courante d'entraînement du rotor principal 5 est inférieure à la vitesse-objectif NRobj, le pilote automatique 10 génère des commandes automatiques de vol CA1 provoquant une variation du pas des pales 9 du rotor principal 5 visant à obtenir les conditions de sustentation stabilisée 23 du giravion identifiées par le calculateur 17. Par ailleurs, le pilote automatique 10 détermine, sous condition de son armement en un mode spécifique de fonctionnement, un cas de vol stabilisé 24 du giravion suivant ses divers axes de progression.

Le pilote automatique 10 est susceptible d'être préalablement armé dans le mode de calcul du cas de vol stabilisé 24 en prévision d'une éventuelle panne-moteur, ou encore est automatiquement armé par suite de la transmission par l'unité de régulation 7 de la donnée de panne-moteur 16 au pilote automatique 10. Le pilote automatique 10 est aussi susceptible d'être armé par le pilote humain 11 générant une commande manuelle d'armement 25 du pilote automatique 10 par l'intermédiaire d'un bouton de commande 26 dédié à cette fin.

Par suite, le pilote automatique 10 génère des commandes automatiques de vol CA2 modifiant le pas des pales 9 du ou des rotors 5,6 pour procurer un guidage du giravion conformément au cas de vol stabilisé 24 préalablement déterminé.

Le pilote humain 11 peut aussi générer à tout instant par l'intermédiaire du bouton de commande 26 une commande manuelle de désarmement 27 du pilote automatique 10 pour permettre au pilote humain 11 d'intervenir en mode manuel de guidage sur le comportement du giravion, afin de stabiliser l'attitude du giravion suivant ses différents axes de progression. Dans ce cas, le pilote humain 11 applique une procédure d'urgence 28 consignée dans le manuel de vol 29 du giravion.

Il est plus spécifiquement proposé de déterminer le cas de vol stabilisé 24 du giravion par le pilote automatique 10 selon diverses informations 30 transmises par l'instrumentation de bord 15. Le pilote automatique 10 détermine notamment le cas de vol stabilisé 24 du giravion en prenant en compte divers paramètres tels que la vitesse-air TAS courante du giravion, la hauteur-sol Hs du giravion et/ou la température T de l'air extérieur ambiant environnant le giravion.

Une base de données 32 répertoriant diverses phases de vol 31 respectives du giravion peut être exploitée pour déterminer le cas de vol stabilisé 24 à appliquer selon la phase de vol courante du giravion, telle que par exemple en phase de vol du giravion proche du sol et/ou en phase de décollage ou d'atterrissage automatique.

Selon une forme de réalisation en mode automatique de guidage du giravion, le pilote automatique 10 détermine les commandes automatiques de vol CA1, CA2 à opérer procurant ledit cas de vol stabilisé du giravion, conformément à l'application d'une consigne NR 19 d'une valeur au moins égale à un seuil de vitesse S prédéfini.

La valeur du premier seuil de vitesse S est notamment prédéfinie supérieure à 97% de la valeur de la vitesse nominale NRnom, pour maintenir un entraînement du rotor principal à une vitesse NR procurant une progression sécurisée du giravion. L'application d'une consigne NR 19 générée par l'unité de commande 8 d'une valeur au moins égale audit seuil de vitesse S est notamment opérée par limitation d'une variation du pas des pales 9 du rotor principal 5 vis-à-vis d'un seuil de pas SP prédéfini.

Par ailleurs, au moins le levier de pas 12 voire aussi le manche cyclique 13 sont équipés d'au moins un dispositif 33 générateur de signaux tactiles 34,35, tel qu'un vibreur ou un organe opposant un effort résistant à l'encontre d'une manoeuvre du levier de pas 12 et/ou du manche cyclique 13.

Le dispositif 33 générateur de signaux tactiles est potentiellement activé par le pilote automatique 10 pour alerter le pilote humain 11 d'une requête potentiellement excessive en puissance mécanique à fournir par le groupe de motorisation 1.

A cet effet dans le cas où le pas des pales 9 du rotor principal 5 est équivalent audit seuil de pas SP, le pilote automatique génère une première requête d'activation 37 du dispositif 33 générateur de signaux tactiles produisant alors un premier signal tactile 34. Puis le cas échéant si le pas des pales 9 du rotor principal 5 est supérieur audit seuil de pas SP, le pilote automatique 10 génère alors une deuxième requête d'activation 38 du dispositif 33 générateur de signaux tactiles produisant alors un deuxième signal tactile 35.

Par ailleurs, le moteur auxiliaire 4 est avantageusement mis à profit pour participer à l'entraînement en rotation du ou des rotors 5,6 du giravion.

L'unité de régulation 7 est apte à identifier un déficit de la puissance mécanique que doit fournir le groupe de motorisation 1 pour procurer une stabilisation rapide au moins en sustentation du giravion par suite des commandes de vol CM1,CM2 ; CA1,CA2 indifféremment opérées par le pilote humain 11 ou par le pilote automatique 10, notamment en cas de panne moteur. En cas d'un tel déficit de puissance identifié, l'unité de régulation 7 est avantageusement génératrice d'une requête 36 de mise en oeuvre du moteur auxiliaire 4 fournissant alors un appoint de puissance mécanique pour participer à l'entraînement du ou des rotors 5,6 du giravion.

## Revendications

1. Méthode de régulation de la vitesse de rotation, dite vitesse NR, d'au moins un rotor principal (5) d'un giravion multi-moteur en cas, dit cas de panne-moteur, de défection de l'un des moteurs principaux (2,3) à combustion d'un groupe de motorisation (1) fournissant au giravion la puissance mécanique nécessaire au moins à l'entraînement en rotation du rotor principal,
le giravion étant équipé :
d'au moins un organe de commande manuelle de vol (12,13) générant, par suite de son entraînement par l'homme, des commandes manuelles de vol provoquant une variation du pas des pales (9) dudit au moins un rotor principal (5), et
d'un pilote automatique (10) générateur de commandes automatiques de vol (CA1,CA2) provoquant une variation du pas des pales (9) dudit au moins un rotor principal (5),
le rotor principal (5), hors cas de panne-moteur, étant entraîné par le groupe de motorisation conformément à l'application d'une consigne de vitesse, dite consigne NR (19,19'), dont la valeur est calculée variable par une unité de commande (8) selon les conditions de vol courantes du giravion dans une plage de valeurs de la consigne NR proportionnelles à la valeur d'une vitesse nominale (NRnom) prédéfinie d'entraînement du rotor principal (5),
l'unité de commande (8) fournissant la consigne NR (19,19') à une unité de régulation (7) du fonctionnement individuel des moteurs principaux (2,3) pour entraîner le rotor principal (5) à une vitesse NR conforme à la consigne NR (19,19'), l'unité de régulation (7) appliquant en cas de panne-moteur un régime de régulation, dit régime OEI, du fonctionnement du moteur principal (2,3) demeurant opérationnel, ledit régime OEI étant sélectionné et appliqué par l'unité de régulation (7) selon une phase de vol identifiée du giravion parmi une pluralité de régimes OEI prédéfinis,
**caractérisée en ce que** la méthode comprend les opérations suivantes :
- un cas de panne-moteur étant identifié par l'unité de régulation (7), l'unité de régulation (7) applique ledit régime OEI et transmet à l'unité de commande (8) une donnée, dite donnée de panne-moteur (16), relative à l'identification du cas de panne-moteur par l'unité de régulation (7), puis
- par suite de la réception par l'unité de commande (8) de ladite donnée de panne-moteur (16), l'unité de commande (8) génère ladite consigne NR (19') selon une valeur au moins égale à la valeur de ladite vitesse nominale (NRnom), et
- dans un cas de vol défavorable selon lequel la valeur de la vitesse NR courante est inférieure à la valeur de la vitesse nominale (NRnom),
un calculateur (17) calcule itérativement une vitesse d'entraînement du rotor principal (5), dite vitesse-objectif (NRobj), selon les modalités suivantes :
- identification selon le cas de vol courant du giravion d'une part de la puissance mécanique disponible apte à être fournie par le groupe de motorisation (1) conformément au régime OEI courant et d'autre part de la portance courante procurée par le rotor principal (5), puis
- identification d'une portance maximale apte à être procurée par le rotor principal (5) sous condition de l'obtention d'une sustentation stabilisée (23) du giravion, à partir d'une vitesse NR apte à être atteinte dans un laps de temps (22) le plus bref possible depuis la vitesse NR courante vers la vitesse-objectif (NRobj), puis
dans le cas où la valeur de la vitesse NR courante est inférieure à la vitesse-objectif (NRobj), génération par le pilote automatique (10) de commandes automatiques de vol (CA1) provoquant une variation du pas des pales (9) du rotor principal (5) jusqu'à obtention d'un entraînement du rotor principal (5) à ladite vitesse-objectif (NRobj).

2. Méthode selon la revendication 1,
**caractérisée en ce que** par suite de l'obtention de ladite sustentation stabilisée (23) du giravion, le pilote automatique (10) calcule un cas de vol stabilisé (24) du giravion et génère des commandes automatiques de vol (CA2) conformes au dit cas de vol stabilisé.

3. Méthode selon la revendication 2,
**caractérisée en ce que** ledit cas de vol stabilisé (24) est calculé conformément à un avancement du giravion à des vitesses moyennes.

4. Méthode selon l'une quelconque des revendications 2 et 3,
**caractérisée en ce que** le cas de vol stabilisé (24) est calculé par prise en compte au moins de l'un au moins des paramètres de vol du giravion comprenant :
- la hauteur-sol (Hs) courante du giravion,
- la vitesse-air (TAS) courante du giravion,
- la température (T) de l'air extérieur ambiant environnant le giravion.

5. Méthode selon la revendication 2,
**caractérisée en ce que** ledit cas de vol stabilisé (24) du giravion est calculé à partir d'une sélection par le pilote automatique (10) d'une phase de vol à atteindre parmi plusieurs phases de vol (31) préalablement répertoriées en prenant en compte la phase de vol courante du giravion.

6. Méthode selon la revendication 5,
**caractérisée en ce que** ledit cas de vol stabilisé (24) du giravion est calculé au moins selon les modalités suivantes :
- en phase de vol du giravion proche du sol, le pilote automatique (10) calcule le cas de vol stabilisé (24) conformément à un guidage du giravion selon une procédure de poser du giravion,
- en phase de décollage automatique du giravion selon lequel le giravion est guidé par le pilote automatique (10) selon une procédure préétablie de décollage, le cas de vol stabilisé (24) est calculé par le pilote automatique conformément à un guidage du giravion en procédure de décollage.

7. Méthode selon l'une quelconque des revendications 2 à 6,
**caractérisée en ce que** ledit cas de vol stabilisé (24) du giravion est calculé par le pilote automatique (10) conformément à l'application d'une consigne NR (19) d'une valeur au moins égale à un seuil de vitesse (S) dont la valeur est prédéfinie selon une vitesse minimale tolérée d'entraînement du rotor principal (5) procurant un vol sécurisé du giravion.

8. Méthode selon l'une quelconque des revendications 2 à 7,
**caractérisée en ce qu'**un armement du pilote automatique (10) en mode de calcul dudit cas de vol stabilisé (24) est provoqué par une commande manuelle d'armement (25) opérée par un pilote humain (11) du giravion.

9. Méthode selon l'une quelconque des revendications 2 à 7,
**caractérisée en ce qu'**un armement du pilote automatique (10) en mode de calcul dudit cas de vol stabilisé (24) est provoqué par une commande automatique d'armement générée par suite de la génération par l'unité de régulation (7) de ladite donnée de panne-moteur (16).

10. Méthode selon l'une quelconque des revendications 2 à 7,
**caractérisée en ce qu'**un armement du pilote automatique (10) en mode de calcul dudit cas de vol stabilisé (24) est provoqué par un état de pré-armement du pilote automatique (10) préalablement à un éventuel cas de panne-moteur.

11. Méthode selon l'une quelconque des revendications 8 à 10,
**caractérisée en ce que** le pilote automatique (10) étant armé en mode de calcul dudit cas de vol stabilisé (24), un désarmement du pilote automatique (10) hors mode de calcul est opérable par le pilote humain (11) du giravion générant une commande manuelle de désarmement (27).

12. Méthode la revendication 1,
**caractérisée en ce que** par suite de l'obtention de ladite sustentation stabilisée (23) du giravion, un pilote humain (11) du giravion génère des commandes manuelles de vol procurant un guidage en vol stabilisé du giravion conformément à l'application d'une procédure d'urgence (28) préétablie et consignée au manuel de vol (29).

13. Méthode selon la revendication 12,
**caractérisée en ce que** ladite procédure d'urgence (28) est conforme à un guidage du giravion évoluant en altitude (Al), à une température (T) élevée de l'air extérieur ambiant environnant le giravion et à un entraînement du rotor principal (5) à une vitesse NR basse de rotation.

14. Méthode selon la revendication 7,
**caractérisée en ce que** l'application d'une consigne NR (19) à une valeur au moins égale audit seuil de vitesse (S) est opérée par limitation d'une variation du pas des pales (9) du rotor principal (2) vis-à-vis d'un seuil de pas (SP) des pales (9) du rotor principal (2) prédéfini.

15. Méthode selon la revendication 14,
**caractérisée en ce que** l'un quelconque au moins des organes de commande manuelle de vol (12,13) provoquant une variation du pas des pales (9) du rotor principal (5) est équipé d'un dispositif (33) générateur de signaux tactiles (34,35) produisant au moins un premier signal tactile (34) par suite d'une identification selon la mécanique de vol du giravion d'un pas des pales (9) du rotor principal (5) équivalent audit seuil de pas (SP).

16. Méthode selon la revendication 15,
**caractérisée en ce que** le dispositif (33) générateur de signaux tactiles (34,35) génère un deuxième signal tactile (35) par suite d'une identification selon la mécanique de vol du giravion d'un pas des pales (9) du rotor principal (5) supérieur audit seuil de pas (SP).

17. Méthode selon l'une quelconque des revendications 1 à 16,
**caractérisée en ce que** le groupe de motorisation (1) comprenant au moins un moteur auxiliaire (4) et sous réserve d'une identification par l'unité de commande (8) d'un déficit de puissance consommée par le rotor principal (5) vis-à-vis de l'obtention rapide d'une sustentation stabilisée du giravion, l'unité de régulation (7) est génératrice d'une requête (36) de mise en oeuvre dudit au moins un moteur auxiliaire (4).

18. Méthode selon la revendication 17,
**caractérisée en ce que** ledit au moins un moteur auxiliaire (4) est indifféremment une machine électrique et/ou une unité auxiliaire de puissance (APU).

19. Méthode selon l'une quelconque des revendications 1 à 18, **caractérisée en ce que** l'unité de régulation (7) est génératrice d'une commande de régulation du fonctionnement individuel de chacun des moteurs principaux (2,3) prenant en compte au moins d'une part la consigne NR (19) et d'autre part une anticipation de la puissance mécanique à fournir par le groupe de motorisation (1) identifiée selon la mécanique du vol du giravion provoquant au moins une variation du pas des pales (9) dudit au moins un rotor principal (5).

20. Giravion (G) adapté pour l'application d'une méthode de régulation de la vitesse de rotation, dite vitesse NR, d'au moins un rotor principal (5) de ce giravion (G) ; ce giravion (G) étant multi-moteur ; la méthode de régulation étant appliquée en cas, dit cas de panne-moteur, de défection de l'un des moteurs principaux (2,3) à combustion d'un groupe de motorisation (1) fournissant au giravion (G) la puissance mécanique nécessaire au moins à l'entraînement en rotation du rotor principal ; le giravion (G) étant équipé :
- d'au moins un organe de commande manuelle de vol (12,13) générant, par suite de son entraînement par l'homme, des commandes manuelles de vol provoquant une variation du pas des pales (9) dudit au moins un rotor principal (5),
- d'un calculateur (17),
- d'une unité de commande (8), et
- d'un pilote automatique (10) générateur de commandes automatiques de vol (CA1, CA2) provoquant une variation du pas des pales (9) dudit au moins un rotor principal (5),
le rotor principal (5), hors cas de panne-moteur, étant entraîné par le groupe de motorisation conformément à l'application d'une consigne de vitesse, dite consigne NR (19,19'), dont la valeur est calculée variable par l'unité de commande (8) selon les conditions de vol courantes du giravion dans une plage de valeurs de la consigne NR proportionnelles à la valeur d'une vitesse nominale (NRnom) prédéfinie d'entraînement du rotor principal (5), l'unité de commande (8) fournissant la consigne NR (19,19') à une unité de régulation (7) du fonctionnement individuel des moteurs principaux (2,3) pour entraîner le rotor principal (5) à une vitesse NR conforme à la consigne NR (19,19'), l'unité de régulation (7) appliquant en cas de panne-moteur un régime de régulation, dit régime OEI, du fonctionnement du moteur principal (2,3) demeurant opérationnel, ledit régime OEI étant sélectionné et appliqué par l'unité de régulation (7) selon une phase de vol identifiée du giravion parmi une pluralité de régimes OEI prédéfinis ; **caractérisé en ce que** la méthode comprend les opérations suivantes :
- un cas de panne-moteur étant identifié par l'unité de régulation (7), l'unité de régulation (7) applique ledit régime OEI et transmet à l'unité de commande (8) une donnée, dite donnée de panne-moteur (16), relative à l'identification du cas de panne-moteur par l'unité de régulation (7), puis,
- par suite de la réception par l'unité de commande (8) de ladite donnée de panne-moteur (16), l'unité de commande (8) génère ladite consigne NR (19') selon une valeur au moins égale à la valeur de ladite vitesse nominale (NRnom), et
- dans un cas de vol défavorable selon lequel la valeur de la vitesse NR courante est inférieure à la valeur de la vitesse nominale (NRnom) ; le calculateur (17) calculant itérativement une vitesse d'entraînement du rotor principal (5), dite vitesse-objectif (NRobj), selon les modalités suivantes :
- identification selon le cas de vol courant du giravion d'une part de la puissance mécanique disponible apte à être fournie par le groupe de motorisation (1) conformément au régime OEI courant et d'autre part de la portance courante procurée par le rotor principal (5), puis,
- identification d'une portance maximale apte à être procurée par le rotor principal (5) sous condition de l'obtention d'une sustentation stabilisée (23) du giravion, à partir d'une vitesse NR apte à être atteinte dans un laps de temps (22) le plus bref possible depuis la vitesse NR courante vers la vitesse-objectif (NRobj), puis,
dans le cas où la valeur de la vitesse NR courante est inférieure à la vitesse-objectif (NRobj), génération par le pilote automatique (10) de commandes automatiques de vol (CA1) provoquant une variation du pas des pales (9) du rotor principal (5) jusqu'à obtention d'un entraînement du rotor principal (5) à ladite vitesse-objectif (NRobj).

## Patentansprüche

1. Verfahren zur Regulierung der Rotationsgeschwindigkeit NR mindestens eines Hauptrotors (5) eines mehrmotorigen Drehflügel-Flugzeugs im Falle eines Motorausfalls, bei dem einer der Hauptverbrennungsmotoren (2, 3) einer Antriebseinheit (1), die dem Drehflügel-Flugzeug die notwendige mechanische Leistung liefert, um mindestens den Hauptrotor drehanzutreiben, defekt ist, wobei das Flugzeug ausgerüstet ist mit:
mindestens einem manuellen Flugsteuerungsorgan (12, 13), welches infolge seiner Betätigung durch eine Person manuelle Flugbefehle erzeugt, die zu einer Änderung des Neigungswinkels der Rotorblätter (9) des mindestens einen Hauptrotors (5) führen,
und
einem Autopiloten (10), der automatische Flugbefehle (CA1, CA2) erzeugt, die zu einer Änderung des Neigungswinkels von Rotorblättern (2) des mindestens einen Hauptrotors (5) führen,
wobei der Hauptrotor (5) bei Nichtvorliegen eines Motorausfalls von der Antriebseinheit unter Anwendung eines Geschwindigkeits-Sollwerts NR (19, 19') angetrieben wird, dessen Wert variabel von einer Steuereinheit (8) gemäß den aktuellen Flugbedingungen des Drehflügel-Flugzeugs berechnet wird, in einem Bereich von Sollwerten NR, die proportional zu einem vorbestimmten Geschwindigkeits-Sollwert (NRnom) des Antriebs des Hauptrotors (5) sind, wobei die Steuereinheit (8) den Sollwert NR (19, 19') an eine Einheit (7) zur Regulierung des individuellen Betriebs der Hauptmotoren (2, 3) liefert, um den Hauptrotor (5) mit einer Geschwindigkeit NR anzutreiben, die dem Sollwert NR (19, 19') entspricht, wobei die Regulierungseinheit (7) im Falle eines Motorausfalls eine Regulierungsbetriebsart OEI des Betriebs des Hauptmotors (2, 3), der betriebsbereit bleibt, ausführt, wobei die OEI-Betriebsart von der Regulierungseinheit (7) ausgewählt und angewendet wird gemäß einer Flugphase des Drehflügel-Flugzeugs, die unter einer Mehrzahl von vordefinierten OEI-Betriebsarten wiedererkannt wurde,
**dadurch gekennzeichnet, dass** das Verfahren die folgenden Schritte aufweist:
- wenn ein Motorausfall von der Regulierungseinheit (7) erkannt wurde, führt die Regulierungseinheit (7) die OEI-Betriebsart aus und überträgt an die Steuereinheit (8) eine Motorausfallangabe (16) bezüglich einer Erkennung eines Motorausfalls durch die Regulierungseinheit (7), und
- nachdem die Steuereinheit (8) die Motorausfallangabe (16) empfangen hat, erzeugt sie den Sollwert NR (19') gemäß einem Wert, der kleiner oder gleich dem Geschwindigkeits-Sollwert (NRnom) ist, und
- im Fall eines ungünstigen Flugs, bei dem der aktuelle Geschwindigkeitswert NR kleiner ist als der Geschwindigkeits-Sollwert (NRnom),
berechnet ein Rechner (17) wiederholt eine Antriebsgeschwindigkeit des Hauptrotors (5), Ziel-Geschwindigkeit (NRobj) genannt, nach den folgenden Modalitäten:
- Identifizierung, je nach dem Fall des aktuellen Flugs des Drehflügelflugzeugs, einerseits der verfügbaren mechanischen Leistung, die von der Antriebseinheit (1) gemäß der aktuellen OEI-Betriebsart geliefert werden kann, und andererseits des aktuellen Auftriebs, der von dem Hauptrotor (5) erzeugt wird, und
- Identifizierung eines maximalen Auftriebs, der von dem Hauptrotor (5) unter der Bedingung des Erhalts eines stabilisierten Auftriebs (23) des Drehflügel-Flugzeugs geliefert werden kann, ausgehend von einer Geschwindigkeit NR, die in einer Zeitspanne (22) erreicht werden kann, die so kurz wie möglich ist, ausgehend von der aktuellen Geschwindigkeit NR bis zu der Ziel-Geschwindigkeit (NRobj), und
wenn der Wert der aktuellen Geschwindigkeit kleiner ist als die Ziel-Geschwindigkeit (NRobj), von dem Autopiloten automatische Flugbefehle (CA1) erzeugt werden, die zu einer Änderung des Rotorblatt-Neigungswinkels (9) des Hauptrotors (5) führen, bis ein Antrieb des Hauptrotors (5) mit der Ziel-Geschwindigkeit (NRobj) erreicht wird.

2. Verfahren nach Anspruch 1,
**dadurch gekennzeichnet, dass** nach dem Erhalt des stabilisierten Auftriebs (23) des Drehflügel-Flugzeugs der Autopilot (10) einen Fall eines stabilisierten Fluges (23) des Drehflügel-Flugzeugs berechnet und automatische Flugbefehle (CA2) erzeugt, die dem Fall des stabilisierten Flugs entsprechen.

3. Verfahren nach Anspruch 2,
**dadurch gekennzeichnet, dass** der Fall eines stabilisierten Fluges (24) in Übereinstimmung mit einem Vortrieb des Drehflügel-Flugzeugs bei mittleren Geschwindigkeiten berechnet wird.

4. Verfahren nach einem der Ansprüche 2 und 3,
**dadurch gekennzeichnet, dass** der Fall eines stabilisierten Fluges (24) berechnet wird unter Berücksichtigung mindestens eines der Flugparameter des Drehflügel-Flugzeugs, die umfassen:
- die aktuelle Höhe über dem Boden (Hs) des Drehflügel-Flugzeugs,
- die aktuelle Fluggeschwindigkeit (TAS) des Drehflügel-Flugzeugs,
- die Umgebungstemperatur (T) der Luft, die das Drehflügel-Flugzeug umgibt.

5. Verfahren nach Anspruch 2,
**dadurch gekennzeichnet, dass** der Fall eines stabilisierten Fluges (24) des Drehflügel-Flugzeugs berechnet wird ausgehend von einer Auswahl des Autopiloten (10) einer zu erreichenden Flugphase aus mehreren zuvor gesammelten Flugphasen (31) unter Berücksichtigung der aktuellen Flugphase des Drehflügel-Flugzeugs.

6. Verfahren nach Anspruch 5,
**dadurch gekennzeichnet, dass** der Fall eines stabilisierten Fluges (24) des Drehflügel-Flugzeugs mindestens nach den folgenden Modalitäten berechnet wird:
- in einer Flugphase des Drehflügel-Flugzeugs nahe dem Boden berechnet der Autopilot (10) den Fall des stabilisierten Fluges (24) in Übereinstimmung mit einer Führung des Drehflügel-Flugzeugs gemäß einem Landevorgang des Drehflügel-Flugzeugs,
- in einer automatischen Startphase des Drehflügel-Flugzeugs, bei der das Drehflügel-Flugzeug durch den Autopiloten (10) gemäß einem voreingestellten Startvorgang geführt wird, wird der Fall eines stabilisierten Fluges (24) durch den Autopiloten in Übereinstimmung mit einer Lenkung des Drehflügel-Flugzeugs bei dem Startvorgang berechnet.

7. Verfahren nach einem der Ansprüche 2 bis 6,
**dadurch gekennzeichnet, dass** der Fall eines stabilisierten Fluges (24) des Drehflügel-Flugzeugs durch den Autopiloten (10) in Übereinstimmung mit der Anwendung eines Sollwertes NR (19) erfolgt, der mindestens gleich einem Geschwindigkeits-Schwellenwert (S) ist, dessen Wert vorbestimmt ist gemäß einer tolerierten minimalen Antriebsgeschwindigkeit des Hauptrotors (5), was zu einem gesicherten Flug des Drehflügel-Flugzeugs führt.

8. Verfahren nach einem der Ansprüche 2 bis 7,
**dadurch gekennzeichnet, dass** ein Entsichern des Autopiloten (10) in dem Modus der Berechnung des Falls eines stabilisierten Fluges (24) hervorgerufen wird durch eine manuelle Entsicherungssteuerung (25), die von einem menschlichen Piloten (11) des Drehflügel-Flugzeugs bedient wird.

9. Verfahren nach einem der Ansprüche 2 bis 7,
**dadurch gekennzeichnet, dass** eine Entsicherung des Autopiloten (10) in dem Modus der Berechnung des Falls eines stabilisierten Fluges (24) hervorgerufen wird durch einen automatischen Entsicherungsbefehl, der erzeugt wird infolge der Erzeugung der Motorausfallangabe (16) durch die Regulierungseinheit (7).

10. Verfahren nach einem der Ansprüche 2 bis 7,
**dadurch gekennzeichnet, dass** eine Entsicherung des Autopiloten (10) im Modus der Berechnung des Falls eines stabilisierten Fluges (24) hervorgerufen wird durch einen Zustand der Vor-Entsicherung des Autopiloten (10) vor einem möglichen Fall eines Motorausfalls.

11. Verfahren nach einem der Ansprüche 8 bis 10,
**dadurch gekennzeichnet, dass**, wenn der Autopilot (10) im Modus der Berechnung des Falls eines stabilisierten Fluges (24) entsichert ist, eine Sicherung des Autopiloten (10) außerhalb des Rechenmodus von dem menschlichen Piloten (11) des Drehflügel-Flugzeugs ausführbar ist, der einen manuellen Sicherungsbefehl (27) erzeugt.

12. Verfahren nach Anspruch 1,
**dadurch gekennzeichnet, dass** nach dem Erhalt des stabilisierten Auftriebs (23) des Drehflügel-Flugzeugs ein menschlicher Pilot (11) des Drehflügel-Flugzeugs manuelle Flugbefehle erzeugt, die ein Lenken im stabilisierten Flug des Drehflügel-Flugzeugs bewirken in Übereinstimmung mit der Anwendung einer Notfallmaßnahme (28), die vorerstellt und in dem Flugmanual (29) gespeichert ist.

13. Verfahren nach Anspruch 12,
**dadurch gekennzeichnet, dass** die Notfallmaßnahme (28) mit einer Lenkung des Drehflügel-Flugzeugs übereinstimmt, das in der Höhe (A1) fliegt, einer hohen Temperatur (T) der äußeren Umgebungsluft, die das Drehflügelflugzeug umgibt, und mit einem Antrieb des Hauptrotors (5) mit einer niedrigen Rotationsgeschwindigkeit NR.

14. Verfahren nach Anspruch 7,
**dadurch gekennzeichnet, dass** die Anwendung eines Sollwertes NR (19) auf einen Wert, der mindestens gleich dem Geschwindigkeits-Schwellenwert (S) ist, ausgeführt wird durch die Begrenzung einer Änderung der Neigungswinkeleinstellung von Rotorblättern (9) des Hauptrotors (2) gegenüber einem voreingestellten Schwellenwert des Neigungswinkels (SP) von Rotorblättern (9) des Hauptrotors (2).

15. Verfahren nach Anspruch 14,
**dadurch gekennzeichnet, dass** mindestens ein beliebiges manuelles Flugsteuerorgan (12, 13), welches eine Änderung des Neigungswinkels von Rotorblättern (9) des Hauptrotors (5) bewirkt, mit einer Vorrichtung (33) ausgerüstet ist, die taktile Signale (34, 35) erzeugt, die mindestens ein erstes taktiles Signal (34) erzeugt infolge einer Identifikation, gemäß der Flugmechanik des Drehflügel-Flugzeugs, eines Neigungswinkels von Rotorblättern (9) des Hauptrotors (5), der äquivalent zu dem Schwellenwert des Neigungswinkels (SP) ist.

16. Verfahren nach Anspruch 15,
**dadurch gekennzeichnet, dass** die Vorrichtung (33) zur Erzeugung taktiler Signale (34, 35) ein zweites taktiles Signal (35) erzeugt infolge einer Identifikation, gemäß der Flugmechanik des Drehflügel-Flugzeugs, eines Neigungswinkels von Rotorblättern (9) des Hauptrotors (5), der größer als der Schwellenwert des Neigungswinkels (SP) ist.

17. Verfahren nach einem der Ansprüche 1 bis 16,
**dadurch gekennzeichnet, dass** die Antriebseinheit (1) mindestens einen Hilfsmotor (4) aufweist und, vorbehaltlich einer Identifikation durch die Steuereinheit (8) eines Defizits von von dem Hauptrotor (5) verbrauchter Leistung gegenüber dem schnellen Erhalt eines stabilisierten Auftriebs des Drehflügel-Flugzeugs, die Regulierungseinheit (7) eine Anfrage (36) bezüglich der Inbetriebnahme des mindestens einen Hilfsmotors (4) erzeugt.

18. Verfahren nach Anspruch 17,
**dadurch gekennzeichnet, dass** der mindestens eine Hilfsmotor (4) eine elektrische Maschine und/oder eine Hilfsleistungseinheit (APU) ist.

19. Verfahren nach einem der Ansprüche 1 bis 18,
**dadurch gekennzeichnet, dass** die Regulierungseinheit (7) einen Regulierungsbefehl des individuellen Betriebs eines jeden Hauptmotors (2, 3) erzeugt, der mindestens einerseits den Sollwert NR (19) und andererseits eine Vorwegnahme der von der Antriebseinheit (1) zu liefernden mechanischen Leistung berücksichtigt, die gemäß der Flugmechanik des Drehflügel-Flugzeugs identifiziert wurde, die mindestens eine Änderung des Neigungswinkels von Rotorblättern (9) des mindestens einen Hauptrotors (5) bewirkt.

20. Drehflügel-Flugzeug (G), welches ausgestattet ist zur Anwendung eines Verfahren zur Regulierung der Drehgeschwindigkeit NR mindestens eines Hauptrotors (5) dieses Drehflügel-Flugzeugs (G), wobei dieses Drehffügel-Flugzeug (G) mehrere Motoren aufweist, wobei das Regulierungsverfahren angewendet wird im Fall eines Motorausfalls oder des Defekts eines Hauptverbrennungsmotors (2, 3) einer Antriebseinheit (1), die dem Drehflügel-Flugzeug (G) die notwendige mechanische Leistung liefert, um mindestens den Hauptrotor in Drehung zu versetzen, wobei das Drehflügel-Flugzeug (G) ausgerüstet ist mit:
- mindestens einem manuellen Flugsteuerorgan (12, 13), welches infolge seiner Betätigung durch eine Person manuelle Flugbefehle erzeugt, die eine Änderung des Neigungswinkels von Rotorblättern (9) des mindestens einen Hauptrotors (5) bewirken,
- einem Rechner (17),
- einer Steuereinheit (8) und
- einem Autopiloten (10), der automatische Flugbefehle (CA1, CA2) erzeugt, die eine Änderung des Neigungswinkels von Rotorblättern (9) des mindestens einen Hauptrotors (5) bewirken,
wobei der Hauptrotor (5) bei Nichtvorliegen eines Motorausfalls durch die Antriebseinheit angetrieben wird in Übereinstimmung mit der Anwendung eines Geschwindigkeits-Sollwerts NR (19, 19'), dessen Wert variabel durch die Steuereinheit (8) gemäß den aktuellen Flugbedingungen des Drehflügel-Flugzeugs berechnet wird in einem Bereich von Sollwerten NR, die proportional zu dem Wert einer vorbestimmten Nominalgeschwindigkeit (NRnom) des Antriebs des Hauptrotors (5) sind,
wobei die Steuereinheit (8) den Sollwert NR (19, 19') an eine Einheit (7) zur Regulierung des individuellen Betriebs von Hauptmotoren (2, 3) liefert, um den Hauptrotor (5) mit einer Geschwindigkeit NR anzutreiben, die dem Sollwert NR (19, 19') entspricht, wobei die Regulierungseinheit (7) im Fall eines Motorausfalls eine Regulierungsbetriebsart OEI des Betriebs des Hauptmotors (2, 3) ausführt, der betriebsbereit bleibt, wobei die OEI-Betriebsart von der Regulierungseinheit (7) unter einer Mehrzahl von vordefinierten OEI-Betriebsarten ausgewählt und angewendet wird gemäß einer identifizierten Flugphase des Drehflügel-Flugzeugs,
**dadurch gekennzeichnet, dass** das Verfahren folgende Schritte aufweist:
- wenn ein Motorausfall von der Regulierungseinheit (7) erkannt wurde, führt die Regulierungseinheit (7) die OEI-Betriebsart aus und überträgt an die Steuereinheit (8) eine Motorausfallangabe (16) bezüglich einer Erkennung eines Motorausfalls durch die Regulierungseinheit (7), und
- nachdem die Steuereinheit (8) die Motorausfallangabe (16) empfangen hat, erzeugt sie den Sollwert NR (19') gemäß einem Wert, der kleiner oder gleich dem Geschwindigkeits-Sollwert (NRnom) ist, und
- im Fall eines ungünstigen Flugs, bei dem der aktuelle Geschwindigkeitswert NR kleiner ist als der Geschwindigkeits-Sollwert (NRnom), berechnet der Rechner (17) wiederholt eine Antriebsgeschwindigkeit des Hauptrotors (5), Ziel-Geschwindigkeit (NRobj) genannt, nach den folgenden Modalitäten:
- Identifizierung, je nach dem Fall des aktuellen Flugs des Drehflügelflugzeugs, einerseits der verfügbaren mechanischen Leistung, die von der Antriebseinheit (1) gemäß der aktuellen OEI-Betriebsart geliefert werden kann, und andererseits des aktuellen Auftriebs, der von dem Hauptrotor (5) erzeugt wird, und
- Identifizierung eines maximalen Auftriebs, der von dem Hauptrotor (5) unter der Bedingung des Erhalts eines stabilisierten Auftriebs (23) des Drehflügel-Flugzeugs geliefert werden kann, ausgehend von einer Geschwindigkeit NR, die in einer Zeitspanne (22) erreicht werden kann, die so kurz wie möglich ist, ausgehend von der aktuellen Geschwindigkeit NR bis zu der Ziel-Geschwindigkeit (NRobj), und
wenn der Wert der aktuellen Geschwindigkeit kleiner ist als die Ziel-Geschwindigkeit (NRobj), von dem Autopiloten automatische Flugbefehle (CA1) erzeugt werden, die zu einer Änderung des Rotorblatt-Neigungswinkels (9) des Hauptrotors (5) führen, bis ein Antrieb des Hauptrotors (5) mit der Ziel-Geschwindigkeit (NRobj) erreicht wird.

## Claims

1. A method for regulating the speed of rotation, referred to as speed NR, of at least one main rotor (5) of a multi-engine rotorcraft in the event, referred to as "enginefailure situation", of failure of one of the main combustion engines (2, 3) of a power plant (1) supplying the rotorcraft with the mechanical power necessary at least to drive the main rotor in rotation,
the rotorcraft being equipped:
with at least one manual flight control member (12, 13) generating, as a result of being driven by a human, manual flight commands which bring about a variation in the pitch of the blades (9) of said at least one main rotor (5), and
with an autopilot (10) which generates automatic flight commands (CA1, CA2) which bring about a variation in the pitch of the blades (9) of said at least one main rotor (5),
the main rotor (5), when not in an engine-failure situation, being driven by the power plant in accordance with the application of a speed setpoint, referred to as setpoint NR (19, 19'), the value of which is calculated to be variable by a control unit (8) depending on the current flight conditions of the rotorcraft within a range of values of the setpoint NR which are proportional to the value of a predefined nominal speed (NRnom) of driving of the main rotor (5),
the control unit (8) supplying the setpoint NR (19, 19') to a regulating unit (7) for regulating the individual operation of the main engines (2, 3) for driving the main rotor (5) at a speed NR which is in accordance with the setpoint NR (19, 19'), the regulating unit (7) in an engine-failure situation applying a regulation rating, referred to as "OEI rating", regulating the operation of the main engine (2, 3) which remains operational, said OEI rating being selected and applied by the regulating unit (7) from among a plurality of predefined OEI ratings depending on an identified flight phase of the rotorcraft,
**characterised in that** the method comprises the following operations:
- an engine-failure situation being identified by the regulating unit (7), the regulating unit (7) applies said OEI rating and transmits to the control unit (8) data, referred to as "engine-failure data" (16), relating to the identification of the engine-failure situation by the regulating unit (7), then
- following receipt by the control unit (8) of said engine-failure data (16), the control unit (8) generates said setpoint NR (19') depending on a value which is at least equal to the value of said nominal speed (NRnom), and
- in an unfavourable flight situation in which the value of the current speed NR is less than the value of the nominal speed (NRnom),
a computer (17) iteratively calculates a speed of driving the main rotor (5), referred to as target speed (NRobj), as follows:
- identification, depending on the current flight situation of the rotorcraft, on one hand of the mechanical power available which is capable of being supplied by the power plant (1) in accordance with the current OEI rating and on the other hand of the current lift provided by the main rotor (5), then
- identification of a maximum lift capable of being provided by the main rotor (5) on condition of stabilised lift (23) of the rotorcraft being obtained, based on a speed NR capable of being achieved within as short a time span (22) as possible from the current speed NR to the target speed (NRobj), then
in the event that the value of the current speed NR is less than the target speed (NRobj), generation by the autopilot (10) of automatic flight commands (CA1) which bring about a variation in the pitch of the blades (9) of the main rotor (5) until driving of the main rotor (5) at said target speed (NRobj) is obtained.

2. A method according to Claim 1,
**characterised in that** following the obtaining of said stabilised lift (23) of the rotorcraft, the autopilot (10) calculates a stabilised flight situation (24) of the rotorcraft and generates automatic flight commands (CA2) in accordance with said stabilised flight situation.

3. A method according to Claim 2,
**characterised in that** said stabilised flight situation (24) is calculated in accordance with forward progress of the rotorcraft at average speeds.

4. A method according to any one of Claims 2 and 3,
**characterised in that** the stabilised flight situation (24) is calculated by taking into account at least one at least of the flight parameters of the rotorcraft, comprising:
- the current ground height (Hs) of the rotorcraft,
- the current airspeed (TAS) of the rotorcraft,
- the temperature (T) of the external ambient air surrounding the rotorcraft.

5. A method according to Claim 2,
**characterised in that** said stabilised flight situation (24) of the rotorcraft is calculated based on a selection by the autopilot (10) of a flight phase to be achieved from among a plurality of flight phases (31) previously stored, taking into account the current flight phase of the rotorcraft.

6. A method according to Claim 5,
**characterised in that** said stabilised flight situation (24) of the rotorcraft is calculated at least as follows:
- in the phase of flight of the rotorcraft close to the ground, the autopilot (10) calculates the stabilised flight situation (24) in accordance with guiding of the rotorcraft according to a procedure for landing the rotorcraft,
- in the automatic takeoff phase of the rotorcraft according to which the rotorcraft is guided by the autopilot (10) according to a pre-established takeoff procedure, the stabilised flight situation (24) is calculated by the autopilot in accordance with guiding of the rotorcraft in the takeoff procedure.

7. A method according to any one of Claims 2 to 6,
**characterised in that** said stabilised flight situation (24) of the rotorcraft is calculated by the autopilot (10) in accordance with the application of a setpoint NR (19) of a value at least equal to a speed threshold (S), the value of which is predefined according to a minimum tolerated speed of driving of the main rotor (5) which provides safe flight of the rotorcraft.

8. A method according to any one of Claims 2 to 7,
**characterised in that** setting of the autopilot (10) in calculation mode for calculating said stabilised flight situation (24) is brought about by a manual setting command (25) performed by a human pilot (11) of the rotorcraft.

9. A method according to any one of Claims 2 to 7,
**characterised in that** setting of the autopilot (10) in calculation mode for calculating said stabilised flight situation (24) is brought about by an automatic setting command generated as a result of the generation of said engine-failure data (16) by the regulating unit (7).

10. A method according to any one of Claims 2 to 7,
**characterised in that** setting of the autopilot (10) in calculation mode for calculating said stabilised flight situation (24) is brought about by a state of pre-setting of the autopilot (10) prior to a possible engine-failure situation.

11. A method according to any one of Claims 8 to 10,
**characterised in that**, the autopilot (10) being set in calculation mode for calculating said stabilised flight situation (24), unsetting of the autopilot (10) outside the calculation mode can be performed by the human pilot (11) of the rotorcraft generating a manual unsetting command (27).

12. A method according to Claim 1,
**characterised in that** following the obtaining of said stabilised lift (23) of the rotorcraft, a human pilot (11) of the rotorcraft generates manual flight commands providing guiding during stabilised flight of the rotorcraft in accordance with the application of a pre-established emergency procedure (28) laid down in the flight manual (29).

13. A method according to Claim 12,
**characterised in that** said emergency procedure (28) is in accordance with guiding of the rotorcraft flying at altitude (Al), at a high temperature (T) of the ambient external air surrounding the rotorcraft and with the main rotor (5) being driven at a low speed NR of rotation.

14. A method according to Claim 7,
**characterised in that** the application of a setpoint NR (19) of a value at least equal to said speed threshold (S) is performer by limiting a variation in the pitch of the blades (9) of the main rotor (2) with respect to a predefined pitch threshold (SP) of the blades (9) of the main rotor (2).

15. A method according to Claim 14,
**characterised in that** any one at least of the manual flight control members (12, 13) bringing about a variation in the pitch of the blades (9) of the main rotor (5) is equipped with a device (33) which generates tactile signals (34, 35) producing at least one first tactile signal (34) as the result of identification by the flight mechanics of the rotorcraft of a pitch of the blades (9) of the main rotor (5) which is equivalent to said pitch threshold (SP).

16. A method according to Claim 15,
**characterised in that** the device (33) which generates tactile signals (34, 35) generates a second tactile signal (35) as the result of identification by the flight mechanics of the rotorcraft of a pitch of the blades (9) of the main rotor (5) which is greater than said pitch threshold (SP).

17. A method according to any one of Claims 1 to 16,
**characterised in that** the power plant (1) comprising at least one auxiliary engine (4) and subject to identification by the control unit (8) of a deficit in power consumed by the main rotor (5) with regard to the rapid obtaining of stabilised lift of the rotorcraft, the regulating unit (7) generates a request (36) to make use of said at least one auxiliary engine (4).

18. A method according to Claim 17,
**characterised in that** said at least one auxiliary engine (4) is equally well an electric engine and/or an auxiliary power unit (APU).

19. A method according to any one of Claims 1 to 18,
**characterised in that** the regulating unit (7) generates a command for regulating the individual operation of each of the main engines (2,3) taking into account at least on one hand the setpoint NR (19) and on the other hand anticipation of the mechanical power to be supplied by the power plant (1) and identified according to the mechanics of the flight of the rotorcraft bringing about at least a variation in the pitch of the blades (9) of said at least one main rotor (5).

20. A rotorcraft (G) suitable for the application of a method for regulating the speed of rotation, referred to as speed NR, of at least one main rotor (5) of this rotorcraft (G); this rotorcraft (G) being multi-engine; the regulation method being applied in the event, referred to as "engine-failure situation", of failure of one of the main combustion engines (2, 3) of a power plant (1) supplying the rotorcraft (G) with the mechanical power necessary at least to drive the main rotor in rotation; the rotorcraft (G) being equipped:
- with at least one manual flight control member (12, 13) generating, as a result of being driven by a human, manual flight commands which bring about a variation in the pitch of the blades (9) of said at least one main rotor (5),
- with a computer (17),
- with a control unit (8), and
- with an autopilot (10) which generates automatic flight commands (CA1, CA2) which bring about a variation in the pitch of the blades (9) of said at least one main rotor (5), the main rotor (5), when not in an engine-failure situation, being driven by the power plant in accordance with the application of a speed setpoint, referred to as setpoint NR (19, 19'), the value of which is calculated to be variable by the control unit (8) depending on the current flight conditions of the rotorcraft within a range of values of the setpoint NR which are proportional to the value of a predefined nominal speed (NRnom) of driving of the main rotor (5),
the control unit (8) supplying the setpoint NR (19, 19') to a regulating unit (7) for regulating the individual operation of the main engines (2, 3) for driving the main rotor (5) at a speed NR which is in accordance with the setpoint NR (19, 19'), the regulating unit (7) in an engine-failure situation applying a regulation rating, referred to as OEI rating, regulating the operation of the main engine (2, 3) which remains operational, said OEI rating being selected and applied by the regulating unit (7) from among a plurality of predefined OEI ratings according to an identified flight phase of the rotorcraft; **characterised in that** the method comprises the following operations:
- an engine-failure situation being identified by the regulating unit (7), the regulating unit (7) applies said OEI rating and transmits to the control unit (8) data, referred to as "engine-failure data" (16), relating to the identification of the engine-failure situation by the regulating unit (7), then,
- following receipt by the control unit (8) of said engine-failure data (16), the control unit (8) generates said setpoint NR (19') depending on a value which is at least equal to the value of said nominal speed (NRnom), and
- in an unfavourable flight situation in which the value of the current speed NR is less than the value of the nominal speed (NRnom); the computer (17) iteratively calculating a speed of driving the main rotor (5), referred to as target speed (NRobj), as follows:
- identifcation, depending on the current flight situation of the rotorcraft, on one hand of the mechanical power available which is capable of being supplied by the power plant (1) in accordance with the current OEI rating and on the other hand of the current lift provided by the main rotor (5), then,
- identification of a maximum lift capable of being provided by the main rotor (5) on condition of stabilised lift (23) of the rotorcraft being obtained, based on a speed NR capable of being achieved within as short a time span (22) as possible from the current speed NR to the target speed (NRobj), then,
in the event that the value of the current speed NR is less than the target speed (NRobj), generation by the autopilot (10) of automatic flight commands (CA1) which bring about a variation in the pitch of the blades (9) of the main rotor (5) until driving of the main rotor (5) at said target speed (NRobj) is obtained.
